# EUROPÄISCHE PATENTSCHRIFT

(11) **EP 1 118 083 B1**
(45) Veröffentlichungstag und Bekanntmachung des Hinweises auf die Patenterteilung: **18.07.2007**
(21) Anmeldenummer: 99969823.6
(22) Anmeldetag: 29.09.1999
(51) Int. Cl.: G21C 19/317

(54) **VORRICHTUNG UND VERFAHREN ZUR REKOMBINATION VON WASSERSTOFF UND SAUERSTOFF IN EINEM GASGEMISCH**
DEVICE AND METHOD FOR RECOMBINING HYDROGEN AND OXYGEN IN A GASEOUS MIXTURE
PROCEDE ET DISPOSITIF POUR RECOMBINER DE L'HYDROGENE ET DE L'OXYGENE DANS UN MELANGE GAZEUX

(30) Priorität: 30.09.1998 DE 19844982
(43) Veröffentlichungstag der Anmeldung: 25.07.2001
(73) Patentinhaber: AREVA NP GmbH, 91058 Erlangen (DE)
(72) Erfinder: ECKARDT, Bernd, D-63486 Bruchköbel (DE); HILL, Axel, D-64589 Stockstadt (DE)
(74) Vertreter: Tergau & Pohl Patentanwälte
(86) Internationale Anmeldenummer: PCT/DE1999/003134
(87) Internationale Veröffentlichungsnummer: WO 2000/019449

(56) Entgegenhaltungen:
- DE-A- 2 411 006
- DE-A- 3 339 242
- DATABASE WPI Section Ch, Week 198413 Derwent Publications Ltd., London, GB; Class K05, AN 1984-079054 XP002144265 & JP 59 031497 A (TOKYO SHIBAURA DENKI KK) , 20. Februar 1984 (1984-02-20)

## Beschreibung

Die Erfindung bezieht sich auf eine Vorrichtung zur Rekombination von Wasserstoff und Sauerstoff in einem Gasgemisch, bei der das Gasgemisch über eine Zuströmleitung, in die ein Fördergebläse geschaltet ist, einer Heizkammer zuführbar ist. Sie betrifft weiter ein Verfahren zur Rekombination von Wasserstoff und Sauerstoff in einem Gasgemisch.

In einem Kernkraftwerk muß bei Stör- oder Unfallsituationen, bei denen beispielsweise aufgrund von Kernaufheizung eine Oxidation von Zirkonium auftreten kann, mit der Bildung und Freisetzung von Wasserstoffgas und Kohlenmonoxid innerhalb des den Reaktorkern umschließenden Sicherheitsbehälters oder Containments gerechnet werden. Dadurch können innerhalb des Containments explosive Gasgemische entstehen.

Zur Verhinderung der Bildung derartiger explosiver Gasgemische im Containment eines Kernkraftwerks werden verschiedene Einrichtung oder Verfahren diskutiert. Hierzu gehören beispielsweise Einrichtungen wie katalytische oder thermische Rekombinatoren, katalytisch und elektrisch betriebene Zündeinrichtungen oder die Kombination der beiden vorgenannten Einrichtungen sowie Verfahren einer permanenten oder nachträglichen Inertisierung des Containments. Insbesondere thermische Rekombinatoren zeichnen sich dabei durch eine weitgehende Resistenz gegenüber den möglicherweise aus dem Reaktorkern freisetzbaren Substanzen aus und sind somit auch unter verschiedensten Betriebsbedingungen besonders funktionssicher.

Bei einem thermischen Rekombinator, wie er beispielsweise aus der DE 2 411 006 C2 bekannt ist, ist üblicherweise eine Heizkammer vorgesehen, der das Gasgemisch über eine Zuströmleitung zuführbar ist. In der Heizkammer wird das Gasgemisch auf eine derart hohe Temperatur gebracht, daß eine Rekombinationsreaktion des mitgeführten Wasserstoffs mit im Gasgemisch ebenfalls geführtem Sauerstoff einsetzt, die letztlich zum Abbau des Wasserstoffs bis unterhalb eines vorgegebenen Grenzwertes oder unterhalb der Nachweisgrenze führt. Die Zuführung des Gasgemisches zur Heizkammer ist dabei durch ein in die Zuströmleitung geschaltetes Fördergebläse sichergestellt.

Zur bedarfsgerechten Einstellung der Betriebsparameter eines derartigen thermischen Rekombinators ist üblicherweise eine Regelung der Heizleistung für die Heizkammer vorgesehen. So ist beispielsweise aus der DE 3 339 242 C2 ein thermischer Rekombinator bekannt, bei dem eine Führung oder Steuerung der Rekombinationsreaktion durch eine elektrische Regelung der zur Beheizung der Heizkammer vorgesehenen Heizstäbe erfolgt. Auch beim Betrieb des aus der DE 2 411 006 C2 bekannten thermischen Rekombinators ist eine Aufheizung der Heizkammer und eine anschließende Abregelung der Heizleistung in Abhängigkeit von der Reaktionswärme vorgesehen.

Allerdings setzt ein derartiges Konzept hinsichtlich der Auslegung der Heizkammer und der zugeordneten Komponenten eine hinreichend genaue Abstimmung im Hinblick auf bereitzustellende Heizleistung und verarbeitbaren Volumenstrom des Gasgemisches voraus. Insbesondere bei vorgegebenem Auslegungs-Volumenstrom kann dies zu einer vergleichsweise groß dimensionierten und damit - auch infolge möglicherweise geforderter Redundanz bei sicherheitsrelevanten Komponenten - aufwendigen Beheizungseinrichtung für die Heizkammer führen.

Der Erfindung liegt daher die Aufgabe zugrunde, eine Vorrichtung und ein Verfahren der obengenannten Art zur Rekombination von Wasserstoff und Sauerstoff in einem Gasgemisch, insbesondere für die Containment-Atmosphäre eines Kernkraftwerks, anzugeben, bei der mit besonders einfachen Mitteln auch bei verschiedenen Betriebszuständen ein zuverlässiger Abbau des im Gasgemisch geführten Wasserstoffs gewährleistet ist. Weiterhin soll ein zum Betreiben der Vorrichtung besonders geeignetes Verfahren zur Rekombination von Wasserstoff und Sauerstoff in einem Gasgemisch angegeben werden.

Diese Aufgabe wird für eine Vorrichtung und für ein Verfahren der obengenannten Art erfindungsgemäß nach Anspruch 1-10 gelöst.

Die Erfindung geht von der Überlegung aus, daß ein zuverlässiger Abbau des Wasserstoffs im Gasgemisch mit besonders einfachen Mittel erreichbar ist, indem die Rekombinationsvorrichtung hinsichtlich ihrer Betriebsparameter an eine große Vielzahl von Betriebszuständen auf besonders einfache Weise anpaßbar ist. Dazu ist die Fördermenge des Fördergebläses und somit der Volumenstrom des der Heizkammer zugeführten Gasgemisches nicht als feste, sondern vielmehr als variable Betriebsgröße konzipiert. Für einen besonders hohen Wirkungsgrad der Rekombinationsvorrichtung gerade auch bei vergleichsweise geringen Wasserstoffkonzentrationen im Gasgemisch ist dabei die dem Fördergebläse zugeordnete Reglereinheit derart ausgelegt, daß als Eingangsgröße für die Regelung der Fördermenge die jeweils aktuelle ("Ist-") Konzentration des Wasserstoffs im Gasgemisch berücksichtigt wird.

Dabei erfolgt eine Betriebsaufnahme der Rekombinationsvorrichtung mit einem vorgebbaren Startwert für die Fördermenge. Je nach ermittelter Wasserstoffkonzentration im Gasgemisch erfolgt - auch unter Berücksichtigung der durch die Rekombinationsreaktion freigesetzten Reaktionswärme - eine gleitende Durchsatzerhöhung durch die Heizkammer durch entsprechende Nachführung der Fördermenge des Fördergebläses. Dabei kann eine bedarfsweise Erhöhung der Fördermenge auf beispielsweise bis zum doppelten Wert des Startwertes - bei höheren Wasserstoffkonzentrationen - vorgesehen sein, ohne daß die Heizkammer als solche spezifisch auf den maximalen Durchsatzwert ausgelegt sein müßte. Hierbei kann zudem auch eine Temperaturregelung der Heizkammer durch die gleitende Durchsatzregelung - bei nahezu konstanter Heizleistung - erfolgen.

Zweckmäßigerweise ist die Heizkammer dabei von einer Anzahl von Heizstäben beheizbar, deren Heizleistung für eine besonders hohe Flexibilität beim Betrieb der Rekombinationsvorrichtung vorteilhafterweise ebenfalls einstellbar oder regelbar ist. Dabei ist jeder Heizstab in vorteilhafter Ausgestaltung innerhalb eines ihm zugeordneten Strömungsrohres angeordnet, so daß sich als Strömungsbereich für das Gasgemisch jeweils ein Ringspalt zwischen Heizrohr und zugeordnetem Strömungsrohr ergibt.

Zur Vermeidung von Übertemperaturen sind die Heizstäbe zweckmäßigerweise in axialer Richtung in eine Anzahl von, vorzugsweise drei, Leistungsstufen unterteilt. Die Heizstäbe sind vorteilhafterweise elektrisch in einer Dreiecksschaltung verschaltet, wobei vorzugsweise drei Serien mit jeweils acht in Reihe geschalteten Heizstäben vorgesehen sind.

In vorteilhafter Weiterbildung ist der Heizkammer strömungsseitig eine Reaktionskammer nachgeschaltet. In dieser findet eine Vermischung des in der Heizkammer umgesetzten Gasgemisches mit noch unreagiertem Gasgemisch statt. Insbesondere infolge des exothermen Charakters der Rekombinationsreaktion ist das bereits umgesetzte Gasgemisch dabei vergleichsweise stark aufgeheizt. Durch die Vermischung mit dem noch unreagierten Gasgemisch erfährt dieses somit eine Aufheizung, die die Rekombinationsreaktion erneut in Gang setzt. Somit ist ein besonders weitreichender Abbau des im Gasgemisch ursprünglich geführten Wasserstoffs erreichbar. Die Reaktionskammer kann dabei insbesondere als Ringkammer ausgebildet sein, in der sämtliche Strömungsrohre aus der Heizkammer zusammengeführt sind, so daß eine besonders homogene Vermischung sämtlicher die Heizkammer durchströmender Teilströme eintritt. Bei einer derartigen Anordnung ist selbst beim vollständigen Ausfall eines Heizstabes durch die Zusatzrekombination in der Reaktionskammer ein zuverlässiger Abbau des Wasserstoffs gewährleistet.

In alternativer oder weiterer vorteilhafter Ausgestaltung ist der Heizkammer ein statischer Mischer nachgeschaltet. Dieser weist vorzugsweise eine Anzahl von Mischelementen auf, die für eine Beaufschlagung mit Strömungsmedium mit einer Strömungsgeschwindigkeit von mehr als 10 m/s ausgelegt sind. Der statische Mischer bewirkt dabei eine besonders homogene Vermischung von über die Heizkammer geführten Teilströmen des Gasgemisches, so daß insbesondere im Zusammenwirken mit der Reaktionskammer ein wirkungsvoller Wärmeübertrag von umgesetztem Gasgemisch auf nicht reagiertes Gasgemisch und damit die Einleitung einer Rekombinationsreaktion auch im noch nicht umgesetzten Gasgemisch gewährleistet ist.

In besonders vorteilhafter Weiterbildung ist die Vorrichtung dabei hinsichtlich des für das Gasgemisch vorgesehenen Strömungsweges derart ausgebildet, daß der statische Mischer über zumindest einen Teilstrom des infolge der exothermen Rekombinationsreaktion aufgeheizten Gasgemisches beheizbar ist. Durch eine derartige Anordnung ist eine besonders wirkungsvolle Ausnutzung der exothermen Reaktionsenergie der Rekombinationsreaktion ermöglicht, wobei gemeinsam mit der Vermischung verschiedener von der Heizkammer abströmender Teilströme des Gasgemisches miteinander eine Einleitung der Rekombinationsreaktion des noch nicht umgesetzten Wasserstoffes im Gasgemisch erfolgt.

Zur Begrenzung der Temperaturbelastung drucktragender oder druckbelasteter Strukturelemente der Rekombinationsvorrichtung ist die Heizkammer vorteilhafterweise in einem innenisolierten Gehäuse angeordnet. Dabei kann in der Art einer Doppelmantelausführung des Gehäuses ein Luftspalt zwischen einem Gehäuseinnenmantel und einem Gehäuseaußenmantel oder auch ein temperatur- und strahlenbeständiger Isolierstoff vorgesehen sein. Zur Verringerung einer Wärmeübertragung durch Strahlung kann die Innenoberfläche des Gehäuses zudem verspiegelt sein. Der druckbelastete Gehäuseaußenmantel ist dabei zweckmäßigerweise zur Erfüllung auch höchster Sicherheitsanforderungen ausgelegt und dabei thermisch von der Heizkammer und der Reaktionskammer entkoppelt. Die Rekombinationsvorrichtung ist somit für eine gekapselte Rekombination mit nur geringen Wärmeverlusten in den Außenbereich ausgelegt. Durch diese Auslegung ist eine besonders günstige Ausnutzung der bei der exothermen Rekombinationsreaktion freigesetzten Wärme zur Einleitung einer weiteren Rekombinationsreaktion im noch nicht umgesetzten Gasgemisch ermöglicht.

Durch die somit ermöglichte Entkopplung der wärmebelasteten Komponenten von den mechanisch belasteten oder druckbelasteten Komponenten können diese unter Verwendung bekanntermaßen geeigneter Materialien bei besonders geringem Materialverbrauch und unter Sicherstellung besonders hoher Zeitstandswerte von beispielsweise mehr als 1000 Betriebsstunden ausgeführt sein. Insbesondere kann bei einer derartigen Ausführung sichergestellt sein, daß die mechanisch belasteten oder druckbelasteten Komponenten auch unter Vollastbetrieb der Rekombinationsvorrichtung besonders hohe Temperaturen von beispielsweise nicht mehr als 450°C ausgesetzt sind, wobei im Inneren der Rekombinationsvorrichtung - aufgrund der nicht vorliegenden Druckbelastungen - besonders hohe Temperaturen von etwa 800°C herrschen können. Durch diese hohen Temperaturen ist wegen der resultierenden hohen Reaktionsgeschwindigkeiten auch bei hohen Durchsätzen eine effektive Reaktion sichergestellt. In dem Temperaturbereich von bis zu 450°C für die mechanisch belasteten Komponenten ist nach den gängigen Sicherheitsstandards für kerntechnische Anlagen - wie beispielsweise dem ASME-Code - eine Vielzahl von Materialien auch mit hoher Materialstandszeit für die Ausgestaltung der druckbelasteten Komponenten einsetzbar.

In zweckmäßiger Weiterbildung ist der Heizkammer strömungsseitig ein Spritzkühler nachgeschaltet, dessen Gehäuse unmittelbar mit dem der Heizkammer zugeordneten Gehäuse verbunden ist. Der Spritzkühler ermöglicht dabei eine wirkungsvolle Abkühlung des von der Heizkammer oder der Reaktionskammer abströmenden Gasgemisches auf ein für den Außenmantel der anderen im Containment angeordneten Komponenten unbedenkliches Temperaturniveau. Durch die Anordnung des Spritzkühlers unmittelbar an der Heizkammer - insbesondere unter Bildung eines monolithischen Gehäuseblocks mit gemeinsamer "kalter" Außenschale - ist dabei der Einsatz von hochtemperaturfestem Rohrleitungsmaterial nicht erforderlich.

Die mit der Erfindung erzielten Vorteile bestehen insbesondere darin, daß die Rekombinationsvorrichtung durch die bedarfsweise Einstellung der Fördermenge des Fördergebläses in Abhängigkeit vom Wasserstoffgehalt des Gasgemisches und/oder der Reaktionszonentemperaturen besonders flexibel und variabel einsetzbar ist. Somit ist mit vergleichsweise geringem Aufwand ein besonders hoher Wirkungsgrad bei der Umsetzung des Wasserstoffs erreichbar, wobei gerade bei geringem Wasserstoffgehalt die Fördermenge besonders gut an die verfügbare Heizleistung angepaßt werden kann. Zudem ist durch die thermische Entkopplung der druckbelasteten Komponenten der Rekombinationseinrichtung von der Heizkammer und/oder der Reaktionskammer auch bei nur geringer Baugröße der Rekombinationseinrichtung und bei vergleichsweise dünnwandiger Ausführung der Strukturelemente eine besonders hohe Reaktionszonentemperatur möglich und trotzdem für die Außenschale die Einhaltung auch strenger Sicherheitsbestimmungen auf besonders einfache Weise ermöglicht.

Ausführungsbeispiele der Erfindung werden anhand einer Zeichnung näher erläutert. Darin zeigen:
- Figur 1: schematisch eine Vorrichtung zur Rekombination von Wasserstoff und Sauerstoff in einem Gasgemisch,
- Figur 2: eine Rekombinatoreinheit der Vorrichtung gemäß Figur 1,
- Figur 3: eine alternative Rekombinatoreinheit der Vorrichtung gemäß Figur 1, und
- Figur 4: im Ausschnitt eine Reaktionskammmer der Rekombinatoreinheit gemäß Figur 2 oder Figur 3.

Gleiche Teile sind in allen Figuren mit den gleichen Bezugszeichen versehen.

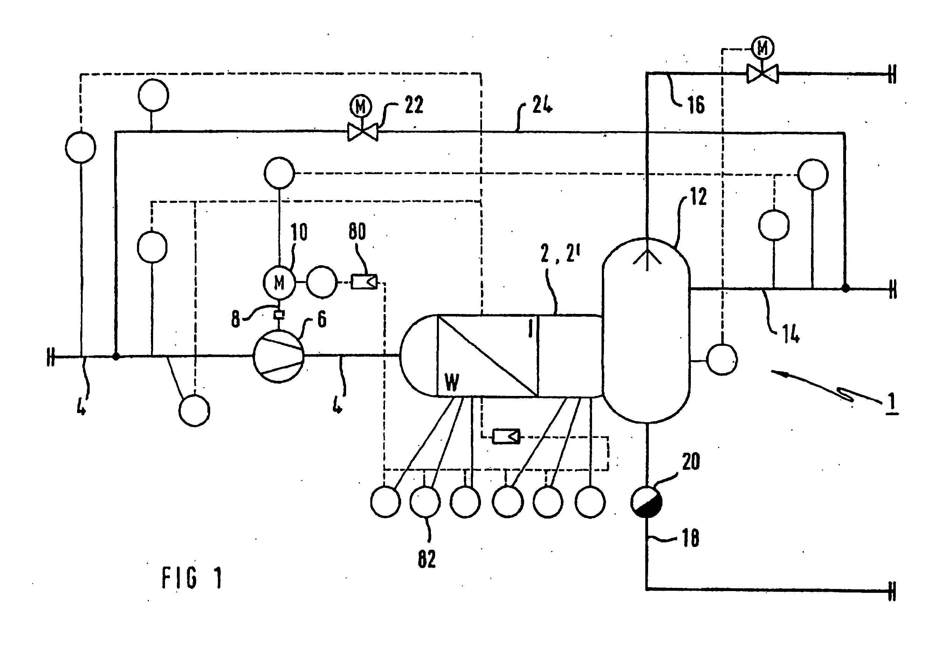

Die Vorrichtung 1 gemäß Figur 1 ist zur Rekombination von Wasserstoff mit Sauerstoff in einem Gasgemisch, nämlich in der Containment-Atmosphäre eines nicht näher dargestellten Kernkraftwerks bei einem Störfall, vorgesehen. Die Vorrichtung 1 umfaßt dazu eine Rekombinatoreinheit 2, 2', der das Gasgemisch über eine Zuströmleitung 4 zuführbar ist. Zur Förderung des Gasgemisches in die Rekombinatoreinheit 2, 2' ist in die Zuströmleitung 4 ein Fördergebläse 6 geschaltet, das über eine Welle 8 mit einem Antriebsmotor 10 verbunden ist. Die Rekombinatoreinheit 2, 2' ist ausgangsseitig mit einem Spritzkühler 12 verbunden, der seinerseits ausgangsseitig an eine Ableitung 14 für das Gasgemisch angeschlossen ist. Der Spritzkühler ist zur Zuführung von Kühlwasser eingangsseitig mit einer Leitung 16 verbunden. Bei der Abkühlung nicht verbrauchtes oder verdampftes Wasser ist aus dem Spritzkühler 12 über eine Wasserableitung 18 abführbar, in die ein Dampffänger 20 geschaltet ist.

Zur bedarfsweisen Umführung der Vorrichtung 1 ist die Zuströmleitung 4 unter Umgehung der Rekombinatoreinheit 2, 2' und des dieser nachgeschalteten Spritzkühlers 12 über eine mit einem Ventil 22 absperrbare Umführungsleitung 24 direkt an die Ableitung 14 angeschlossen.

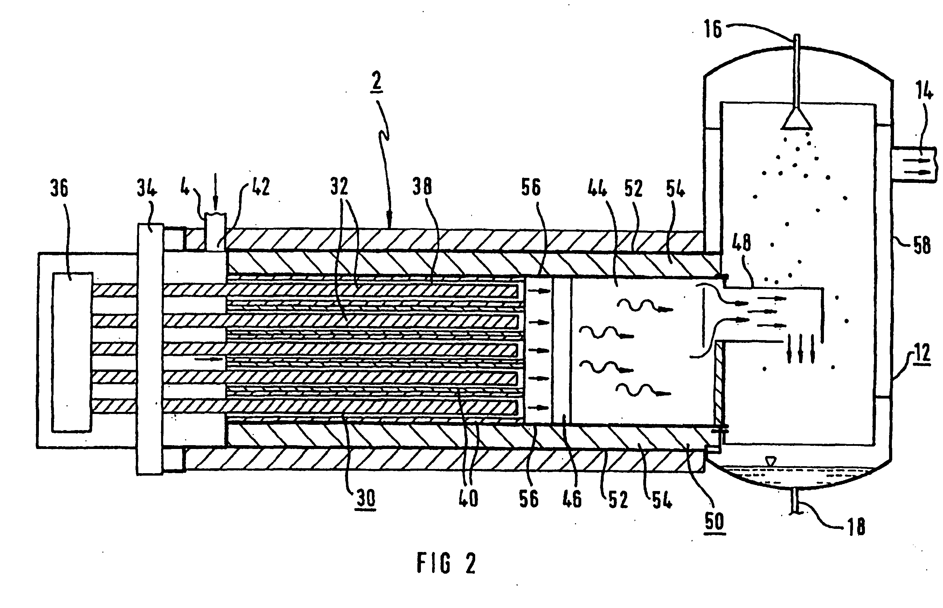

Eine Ausgestaltung der Rekombinatoreinheit 2 ist in Figur 2 im Detail dargestellt. Die Rekombinatoreinheit 2 gemäß Figur 2 umfaßt eine Heizkammer 30, die über eine Anzahl von Heizstäben 32 beheizbar ist. Im Ausführungsbeispiel sind 24 Heizstäbe 32 vorgesehen, die elektrisch zu drei Gruppen von jeweils 8 in Serie geschalteten Heizstäben 32 zusammengefaßt sind. Alternativ kann aber auch eine beliebige andere geeignete Anzahl der Heizstäbe 32 vorgesehen sein. Die Heizstäbe 32 sind durch eine gemeinsame Halteplatte 34, die zudem eine Grenzfläche der Heizkammer 30 bildet, geführt und mit ihrem aus der Heizkammer 30 herausragenden Ende in einer gemeinsamen Halteeinrichtung 36 gehaltert.

In einem Raumbereich 38 innerhalb der Heizkammer 30 ist jeder Heizstab 32 innerhalb eines ihm zugeordneten Strömungsrohres 40 angeordnet. Jeder Heizstab 32 bildet somit gemeinsam mit dem ihm zugeordneten Strömungsrohr 40 im Raumbereich 38 einen ringspaltförmigen Strömungsweg für das Gasgemisch, der einen an die Zuströmleitung 4 angeschlossenen Einlaßbereich 42 der Heizkammer 30 strömungsseitig mit einer dieser nachgeschalteten Reaktionskammer 44 verbindet.

In der Reaktionskammer 44 ist ein statischer Mischer 46 angeordnet, der eine homogene Vermischung der aus den Strömungsrohren 40 abströmenden Teilströme des Gasgemisches miteinander bewirkt. Ausgangsseitig ist die Reaktionskammer 44 mit einer Umlenkeinrichtung 48 verbunden, die ihrerseits in den Innenraum des Spritzkühlers 12 mündet.

Die Heizkammer 30 ist gemeinsam mit der ihr nachgeschalteten Reaktionskammer 44 in einem innenisolierten Gehäuse 50 angeordnet. Das Gehäuse 50 umfaßt dabei einen drucktragenden und somit mechanisch belasteten Außenmantel 52. Zur thermischen Isolierung von der Heizkammer 30 und von der Reaktionskammer 44 ist der Außenmantel 52 mit einer Innenisolation 54 ausgekleidet, die auf ihrer der Heizkammer 30 bzw. der Reaktionskammer 44 zugewandten Innenseite mit einem als Hitzeschild wirkenden Innenmantel 56 versehen ist. Die Innenisolation 54 und der Innenmantel sind dabei hinsichtlich der Materialauswahl und der geometrischen Dimensionierung derart ausgelegt, daß sich selbst bei einer Temperatur im Innenraum der Heizkammer 30 oder der Reaktionskammer 44 von beispielsweise mehr als 820°C am Außenmantel 52 eine Temperatur von nicht mehr als etwa 450°C einstellt.

Der Außenmantel 52 ist somit thermisch von der Heizkammer 30 und von der Reaktionskammer 44 entkoppelt. Auch bei vergleichsweise dünnwandiger Ausführung kann der Außenmantel 52 somit bei Verwendung geeigneter, herkömmlicher Materialien eine auch unter strengen Sicherheitsanforderungen geforderte Drucksicherheit aufweisen.

Der Außenmantel 52 ist mit dem Gehäuse 58 des der Reaktionskammer 44 nachgeschalteten Spritzkühlers 12 unter Bildung eines monolithischen Gehäuseblocks unmittelbar verbunden. Somit ist zur Verbindung der Reaktionskammer 44 mit dem nachgeschalteten Spritzkühler 12 keine druckbelastete Rohrleitung erforderlich.

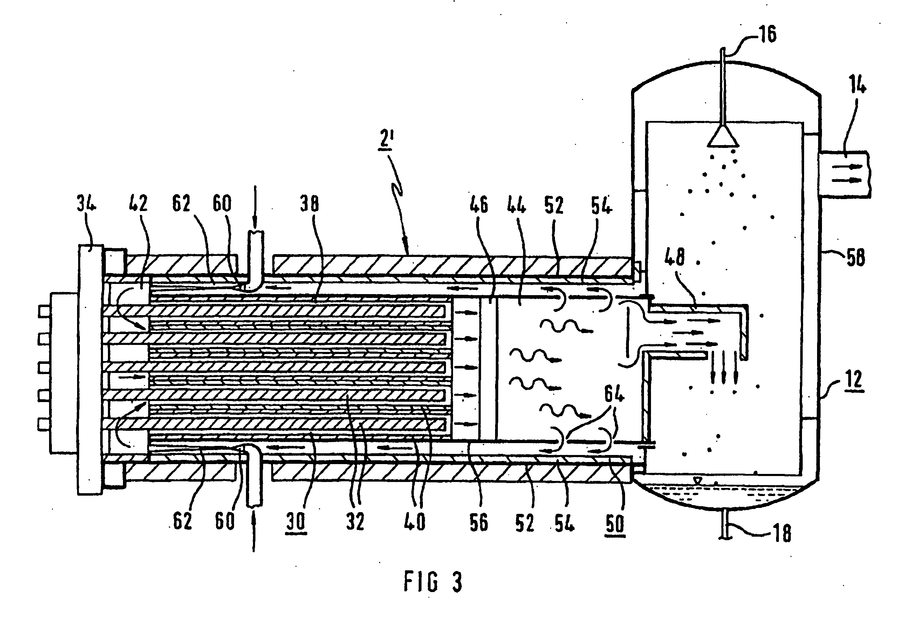

Figur 3 zeigt eine alternative Ausgestaltung der Rekombinatoreinheit 2'. Die Rekombinatoreinheit 2' ist dabei in wesentlichen Punkten gleichartig zur Rekombinatoreinheit 2 aufgebaut, ist jedoch im Gegensatz zu dieser für eine Strahleindüsung des Gasgemisches und für eine Beheizung des statischen Mischers 46 durch einen Teilstrom des infolge der Rekombinationsreaktion aufgeheizten Gasgemisches ausgelegt.

Bei der Rekombinatoreinheit 2' gemäß Figur 3 mündet die Zuströmleitung 4 in eine Anzahl von um die Heizkammer 30 herum angeordneten Strahldüsen 60. Das aus den Strahldüsen 60 austretende Gasgemisch gelangt dabei über ein zwischen dem Innenmantel 56 und dem Außenmantel 52 angeordnetes Kanalsystem 62 in den Einlaßbereich 42 der Heizkammer 30.

Weiterhin ist im Unterschied zur Rekombinatoreinheit 2 der Innenmantel 56 der Rekombinatoreinheit 2' im Bereich der Reaktionskammer 44 mit einer Anzahl von Durchlaßöffnungen 64 versehen, die den Innenraum der Reaktionskammer 44 mit dem Kanalsystem 62 verbinden. Somit kann beim Betrieb der Rekombinatoreinheit 2' ein Teilstrom des in die Reaktionskammer 44 gelangenden Gasgemisches dem Kanalsystem 62 zuströmen und über dieses erneut in den Einlaßbereich 42 der Heizkammer 30 gelangen. Die Zuführung des Gasgemisches in den Einlaßbereich 42 über die Strahldüsen 60 stellt dabei in der Art einer Strahlpumpe aufgrund der Sogwirkung eine Mindestdurchströmung des Kanalsystems 62 sicher. Der das Kanalsystem 62 durchströmende Teilstrom weist dabei infolge der vorangegangenen Rekombinationsreaktion ein erhöhtes Temperaturniveau auf. Dieses wird zur Beheizung des in der Reaktionskammer 44 angeordneten statischen Mischers 46 genutzt.

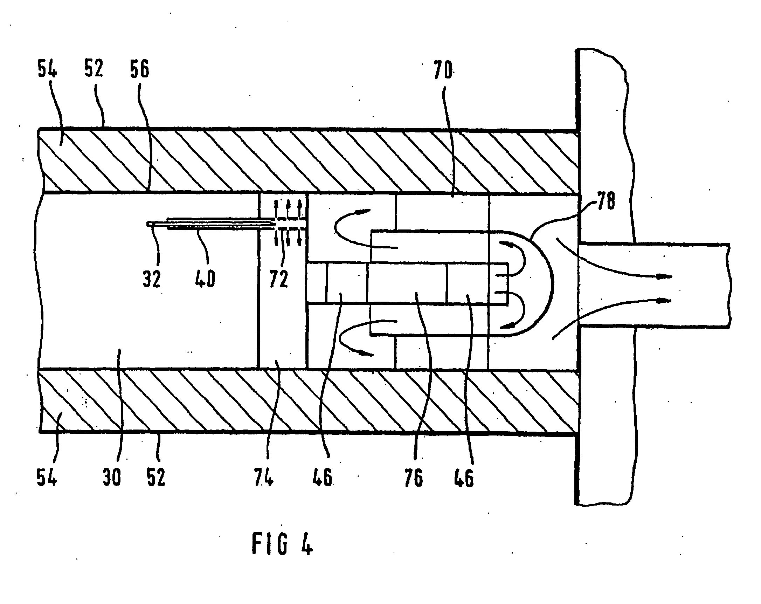

Die Rekombinatoreinheit 2, 2' kann auch mit einer alternativ ausgeführten Reaktionskammer 70, wie sie in Figur 4 dargestellt ist, ausgerüstet sein. Bei dieser Ausgestaltung sind die Strömungsrohre 40, von denen in Figur 4 gemeinsam mit dem zugehörigen Heizstab 32 nur eines gezeigt ist, axial länger ausgedehnt als die zugehörigen Heizstäbe 32. In einem Endbereich 72, der nicht durch den zugehörigen Heizstab 32 ausgefüllt ist, ist dabei jedes Strömungsrohr 40 mit Bohrungen versehen, über die das Gasgemisch in einer Richtung senkrecht zur Längsachse des jeweiligen Heizstabes 32 in eine gemeinsame Turbulenzkammer 74 austritt. Die Zusammenführung der in den Strömungsrohren 40 geführten Teilströme des Gasgemisches in der gemeinsamen Turbulenzkammer 74 bewirkt dabei eine besonders intensive Homogenisierung sämtlicher Teilströme.

Der Turbulenzkammer 74 ist dabei strömungsseitig eine Wirbelkammer 76 nachgeschaltet, in der die statischen Mischer 46 angeordnet sind. Die Wirbelkammer 76 ist dabei von einem becherartig ausgebildeten Strömungselement 78 derart konzentrisch umgeben, daß das aus der Wirbelkammer 76 abströmende Gasgemisch im Gegenstrom an der Außenseite der Wirbelkammer 76 entlanggeführt wird. Das von der Wirbelkammer 76 abströmende Gasgemisch, das aufgrund der vorangegangenen Rekombinationsreaktion eine erhöhte Temperatur von bis zu etwa 800°C aufweist, überträgt seine Wärme somit zumindest teilweise auf die Außenwände der Wirbelkammer 76 und somit auch auf die in dieser angeordneten statischen Mischer 46. Somit sind die statischen Mischer 46 auch in dieser Ausführungsform über zumindest einen Teilstrom des infolge der Rekombinationsreaktion aufgeheizten Gasgemisches beheizbar.

Beim Betrieb der Vorrichtung 1 erfolgt eine Rekombination von Wasserstoff und Sauerstoff im der Rekombinatoreinheit 2, 2' zugeführten Gasgemisch. Dabei wird das Gasgemisch in der Heizkammer 30 zunächst aufgeheizt, wobei die Aufheizung aufgrund der thermischen Entkopplung des druckbelasteten Außenmantels 52 von der Heizkammer 30 bis zu einer Temperatur von mehr als 800°C ohne sicherheitstechnische Bedenken vorgenommen werden kann. Bei einer derartig hohen Temperatur läuft die gewünschte Rekombinationsreaktion mit besonders hoher Geschwindigkeit und Wirksamkeit ab, so daß auch bei den bei höheren Gasdurchsätzen auftretenden kürzeren Verweilzeiten noch hohe Reaktionsgrade erreicht werden können.

Das von der Heizkammer 30 abströmende Ga-sgemisch gelangt in die Reaktionskammer 44 bzw. in die Wirbelkammer 76. Dort wird das Gasgemisch homogenisiert, wobei sich vollständig umgesetzte Teile des Gasgemisches mit möglicherweise noch nicht reagierten Bestandteilen vermischen. Diese Vermischung wird durch den oder die statischen Mischer 46 noch begünstigt. Infolge der Vermischung überträgt der umgesetzte Teil des Gasgemisches seinen infolge der exothermen Rekombinationsreaktion möglicherweise stark erhöhten Wärmeinhalt teilweise auf die noch nicht reagierten Bestandteile des Gasgemisches. Diese erfahren somit eine Erwärmung, die ihrerseits die Rekombinationsreaktion in Gang setzt. Die Vorrichtung 1 zeichnet sich somit durch einen besonders hohen Wirkungsgrad bei der Rekombinationsreaktion aus.

Die Vorrichtung 1 ist aber auch für eine besonders flexible Betriebsweise - je nach anfallender Wasserstoffmenge - ausgelegt. Um zusätzlich zu einer elektrischen Steuerung der Heizstäbe 32 eine besondere Variabilität beim Betrieb zu ermöglichen, ist die Vorrichtung 1 für eine bedarfsgerechte Einstellung der Fördermenge des Fördergebläses 6 ausgebildet. Dazu ist - wie in Figur 1 dargestellt - dem Antriebsmotor 10 und somit auch dem Fördergebläse 6 an sich eine Reglereinheit 80 zugeordnet. Die Reglereinheit 80 übermittelt dem Antriebsmotor 10 ein Stellsignal, anhand dessen die Motordrehzahl und somit die Fördermenge oder Förderleistung des Fördergebläses 6 eingestellt wird. Eingangsseitig ist die Reglereinheit 80 mit einem Wasserstoffsensor 82 zur Ermittlung des Wasserstoffgehalts des Gasgemisches verbunden.

Die Reglereinheit 80 ist dabei derart ausgebildet, daß sie das Stellsignal zur Festlegung der Motordrehzahl in Abhängigkeit vom ermittelten Wasserstoffgehalt des Gasgemisches festsetzt. Dadurch wird beim Betrieb der Vorrichtung 1 die Fördermenge des Fördergebläses 6 in Abhängigkeit vom Wasserstoffgehalt des Gasgemisches und/oder der Reaktionstemperaturen eingestellt. Dabei wird beispielsweise bei Betriebsbeginn der Vorrichtung 1 ein Mindestdurchsatz durch die Rekombinatoreinheit 2, 2' von beispielsweise 150 m3/h bei maximaler Heizleistung der Heizstäbe eingestellt. Bei ansteigendem Wasserstoffgehalt im Gasgemisch wird der Durchsatz unter Beibehaltung der Heizleistung in der Art einer gleitenden Durchsatzerhöhung kontinuierlich und der Erhöhung des Wasserstoffgehaltes entsprechend gesteigert. Je nach Anforderung kann dabei eine Erhöhung des Durchsatzes auf beispielsweise bis zu 300m3/h, also eine Verdoppelung des Durchsatzes, vorgenommen werden.

Durch eine derartige bedarfsgesteuerte Beaufschlagung der Rekombinatoreinheit 2, 2' ist ein zuverlässiger Abbau des Wasserstoffes im Gasgemisch mit besonders hohem Wirkungsgrad und mit besonders einfachen Mitteln gewährleistet.

## Patentansprüche

1. Vorrichtung (1) zur Rekombination von Wasserstoff und Sauerstoff in einem Gasgemisch, bei der das Gasgemisch über eine Zuströmleitung (4), in die ein mit einem Antriebsmotor (10) verbundenes Fördergebläse (6) geschaltet ist, einer elektrisch beheizbaren Heizkammer (30) zuführbar ist, **dadurch gekennzeichnet, daß** eine dem Antriebsmotor (10) zugeordnete Reglereinheit (80) derart ausgebildet ist, dass die Fördermenge des Fördergebläses (6) in Abhängigkeit vom Wasserstoffgehalt des Gasgemisches und/oder der Reaktionstemperatur eingestellt wird.

2. Vorrichtung nach Anspruch 1, bei der die Reglereinheit (80) mit einem Wasserstoffsensor (82) zur Ermittlung des Wasserstoffgehalts des Gasgemisches verbunden ist.

3. Vorrichtung (1) nach Anspruch 1 oder 2, bei der die Heizkammer (30) über eine Anzahl von Heizstäben (32) beheizbar ist.

4. Vorrichtung (1) nach Anspruch 3, bei der jeder Heizstab (32) innerhalb eines zugeordneten Strömungsrohres (40) angeordnet ist.

5. Vorrichtung (1) nach einem der Ansprüche 1 bis 4, deren Heizkammer (30) strömungsseitig eine Reaktionskammer (70) nachgeschaltet ist.

6. Vorrichtung (1) nach einem der Ansprüche 1 bis 5, deren Heizkammer (30) ein statischer Mischer (46) nachgeschaltet ist

7. Vorrichtung (1) nach Anspruch 6, bei der der Strömungsweg des Gasgemisches derart ausgebildet ist, dass der statische Mischer (46) über einen Teilstrom des infolge der Rekombinationsreaktion aufgeheizten Gasgemisches beheizbar ist.

8. Vorrichtung (1) nach einem der Ansprüche 1 bis 7, bei der die Heizkammer (30) in einem innenisolierten Gehäuse (50) angeordnet ist.

9. Vorrichtung (1) nach Anspruch 8, bei der der Heizkammer (30) strömungsseitig ein Spritzkühler (12) nachgeschaltet ist, dessen Gehäuse (8) unmittelbar mit dem der Heizkammer (30) zugeordneten Gehäuse verbunden ist.

10. Verfahren zur Rekombination von Wasserstoff und Sauerstoff in einem Gasgemisch, bei der das Gasgemisch über eine Zuströmleitung (4), in die ein mit einem Antriebsmotor (10) verbundenes Fördergebläse (6) geschaltet ist, einer elektrisch beheizbaren Heizkammer (30) zugeführt wird, **dadurch gekennzeichnet, daß** die Fördermenge des Fördergebläses (6) über eine dem Antriebsmotor (10) zugeordnete Reglereinheit (80) in Abhängigkeit vom Wasserstoffgehalt des Gasgemisches und/oder der Reaktionstemperatur eingestellt wird.

## Claims

1. Device (1) for recombining hydrogen and oxygen in a gas mixture, wherein the gas mixture can be supplied via a supply line (4), in which a supply blower (6) connected with a drive motor (10) is inserted, to an electrically heatable heating chamber (30), **characterized in that** a control unit (80) allocated to the drive motor (10) is designed in such a way that the flow rate of the supply blower (6) is adjusted as a function of the hydrogen content of the gas mixture and/or of the reaction temperature.

2. Device (1) according to claim 1, wherein the control unit (80) is connected with a hydrogen sensor (82) for determining the hydrogen content of the gas mixture.

3. Device (1) according to claim 1 or 2, wherein the heating chamber (30) can be heated by means of a number of heating elements (32).

4. Device (1) according to claim 3, wherein each heating element (32) is arranged inside an allocated flow pipe (40).

5. Device (1) according to any of claims 1 to 4, wherein a reaction chamber (70) is connected downstream to the heating chamber (30) on the flow side.

6. Device (1) according to any of claims 1 to 5, wherein a static mixer (46) is connected downstream to the heating chamber (30).

7. Device (1) according to claim 6, wherein the flow path of the gas mixture is designed in such a way that the static mixer (46) can be heated by means of a partial flow of the gas mixture heated up due to the recombination reaction.

8. Device (1) according to any of claims 1 to 7, wherein the heating chamber (30) is arranged in an internally insulated housing (50).

9. Device (1) according to claim 8, wherein a splash cooler (12) is connected downstream to the heating chamber (30) on the flow side, the housing (8) of said splash cooler (12) being directly connected with the housing allocated to the heating chamber (30).

10. Method for recombining hydrogen and oxygen in a gas mixture, wherein the gas mixture can be supplied via a supply line (4), in which a supply blower (6) connected with a drive motor (10) is inserted, to an electrically heatable heating chamber (30), **characterized in that** the flow rate of the supply blower (6) is adjusted by means of a control unit (80) allocated to the drive motor (10) as a function of the hydrogen content of the gas mixture and/or of the reaction temperature.

## Revendications

1. Dispositif (1) pour recombiner de l'hydrogène et de l'oxygène dans un mélange gazeux, dans lequel le mélange gazeux peut être alimenté au moyen d'une conduite d'alimentation (4) dans laquelle une soufflante d'alimentation (6) raccordée à un moteur de commande (10) est insérée, à une chambre de chauffe (30) chauffable électriquement, **caractérisé en ce qu'**une unité de réglage (80) associée au moteur de commande (10) est réalisée de façon que le débit de la soufflante d'alimentation (6) est ajusté en fonction du teneur en hydrogène du mélange gazeux et/ou de la température de réaction.

2. Dispositif (1) selon la revendication 1, dans lequel l'unité de réglage (80) est raccordée à un détecteur d'hydrogène (82) pour déterminer le teneur en hydrogène du mélange gazeux.

3. Dispositif (1) selon la revendication 1 ou 2, dans lequel la chambre de chauffe (30) peut être chauffé au moyen d'un nombre d'éléments de chauffage (32).

4. Dispositif (1) selon la revendication 3, dans lequel chaque élément de chauffage (32) est arrangé à l'intérieur d'un tube de courant (40) associé.

5. Dispositif (1) selon l'une quelconque des revendications 1 à 4, dans lequel une chambre de réaction (70) est raccordé en aval à la chambre de chauffe (30), du côté de courant.

6. Dispositif (1) selon l'une quelconque des revendications 1 à 5, dans lequel un mélangeur statique (46) est raccordé en aval à la chambre de chauffe (30).

7. Dispositif (1) selon la revendication 6, dans lequel la course du courant du mélange gazeux est réalisée de façon que le mélangeur statique (46) peut être chauffé au moyen d'un courant partiel du mélange gazeux chauffé par suite de la réaction de recombination.

8. Dispositif (1) selon l'une quelconque des revendications 1 à 7, dans lequel la chambre de chauffe (30) est arrangée dans un boîtier (50) isolé à l'intérieur.

9. Dispositif (1) selon la revendication 8, dans lequel un refroidisseur par projection d'eau (12) est raccordé en aval à la chambre de chauffe (30), du côté de courant, le boîtier (8) de ce refroidisseur par projection d'eau (12) étant raccordé directement au boîtier associé à la chambre de chauffe (30).

10. Procédé pour recombiner de l'hydrogène et de l'oxygène dans un mélange gazeux, dans lequel le mélange gazeux peut être alimenté au moyen d'une conduite d'alimentation (4) dans laquelle une soufflante d'alimentation (6) raccordée à un moteur de commande (10) est insérée, à une chambre de chauffe (30) chauffable électriquement, **caractérisé en ce que** le débit de la soufflante d'alimentation (6) est ajusté au moyen d'une unité de réglage (80) associée au moteur de commande (10), en fonction du teneur en hydrogène du mélange gazeux et/ou de la température de réaction.
